# EUROPÄISCHE PATENTSCHRIFT

(11) **EP 3 961 190 B1**
(45) Veröffentlichungstag und Bekanntmachung des Hinweises auf die Patenterteilung: **07.08.2024**
(21) Anmeldenummer: 21181115.3
(22) Anmeldetag: 23.06.2021
(51) Int. Cl.: G01N 21/3563, G01N 21/359, G01N 21/47, A01D 41/127, G01N 21/3554, G01N 21/84, G01N 21/85

(54) **ERNTEMASCHINE MIT OPTISCHER MESSEINRICHTUNG**
HARVESTER WITH OPTICAL MEASURING DEVICE
MOISSONNEUSE AVEC DISPOSITIF DE MESURE OPTIQUE

(30) Priorität: 24.08.2020 DE 102020122041
(43) Veröffentlichungstag der Anmeldung: 02.03.2022
(73) Patentinhaber: CLAAS Selbstfahrende Erntemaschinen GmbH, 33428 Harsewinkel (DE)
(72) Erfinder: Fischer, Frédéric, 59759 Arnsberg (DE); Witte, Johann, 58730 Fröndenberg (DE); Marbach, Ralf, 33775 Versmold (DE)
(74) Vertreter: CLAAS Gruppe

(56) Entgegenhaltungen:
- US-A- 4 806 764
- US-A1- 2008 204 705
- US-A1- 2018 364 160
- US-A1- 2019 289 787

## Beschreibung

Die Erfindung betrifft eine landwirtschaftliche Erntemaschine mit einer optischen Messeinrichtung zur spektralen Vermessung von Erntegut.

Die US 2019/289787 A1 beschreibt eine landwirtschaftliche Erntemaschine mit einem an der Auswurfvorrichtung angeordneten Nahinfrarot-Sensor zur Bestimmung von Bestandteilen, beispielsweise der Feuchte und des Proteingehalts, des Ernteguts.

Aus der EP2923197A ist eine optische Messeinrichtung bekannt. In einer solchen Messeinrichtung wird die Probe als dünne Schicht in einen integrierenden Hohlraum eingebracht und dort spektral vermessen. Die Einbringung der Probe als dünne Schicht erfordert eine aufwendige Geometrie der Messeinrichtung und eine passende Zuführvorrichtung.

Die US 4,806,764 A beschreibt eine NIR-spektrometrische Messvorrichtung zum Vermessen von Reiskörnern im Hinblick auf ihren Feuchte- und Proteingehalt. Die Messvorrichtung umfasst eine integrierende Hohlkugel mit einer optischen Öffnung, wobei die zu vermessende Probe außerhalb der Hohlkugel unmittelbar vor der optischen Öffnung angeordnet ist.

Es ist Aufgabe der Erfindung den Stand der Technik weiterzubilden.

Diese Aufgabe wird erfindungsgemäß durch die kennzeichnenden Merkmale des Anspruchs 1 gelöst.

Die Erfindung ist eine Erntemaschine, insbesondere selbstfahrende Erntemaschine, mit einer optischen Messeinrichtung zum spektralen Vermessen einer Probe, die dazu vorgesehen und eingerichtet ist, Erntegut der Erntemaschine zu vermessen, wobei die optische Messeinrichtung folgendes umfasst:
- einen integrierenden Hohlraum, der ein diffus reflektierendes Inneres aufweist, um Licht in dem integrierenden Hohlraum diffus zu machen;
- eine Lichtquelle, die konfiguriert ist, Licht eines vorbestimmten Wellenlängenbereichs in den integrierenden Hohlraum abzugeben;
- einen Sensor, der konfiguriert ist, Licht aus dem integrierenden Hohlraum zu empfangen,
wobei der integrierende Hohlraum eine optische Öffnung umfasst, wobei die Messeinrichtung dazu vorgesehen und eingerichtet ist, eine außerhalb des integrierenden Hohlraums unmittelbar vor der optischen Öffnung befindliche Probe zu vermessen, wobei sich eine erste Abdeckung innerhalb des Hohlraums befindet und innerhalb des Hohlraums so bewegt werden kann, dass kein Licht die Öffnung durchqueren kann.

Der vorbestimmte Wellenlängenbereich der Lichtquelle ist bevorzugt im infraroten Bereich.

Es versteht sich, dass auch sichtbares Licht und ultraviolettes Licht im vorbestimmten Wellenlängenbereich liegen können. Infrarotes Licht eignet sich insbesondere zur Detektion von Wasser, Proteinen, Lipiden und Kohlenhydraten. Weiterhin versteht sich, dass die Lichtquelle neben dem für die Messung benötigten vorbestimmten Wellenlängenbereich weiteres Licht in den Hohlraum abgeben kann. Der vorbestimmte Wellenlängenbereich im Sinne dieser Erfindung ist der für die Vermessung der Probe genutzte Bereich. Zur Detektion von Wasser kann bspw. der Wellenlängenbereich zwischen 960nm und 980nm im vorbestimmten Wellenlängenbereich liegen.

Der integrierende Hohlraum dient dazu Licht des vorbestimmten Wellenlängenbereichs diffus zu machen. Das bekannteste Beispiel eines integrierenden Hohlraums ist eine Ulbricht-Kugel. Der integrierende Hohlraum ist nicht auf eine Kugelform festgelegt. Die Innenform des integrierenden Hohlraums ist bevorzugt größtenteils kugelförmig. Die Kugelform sorgt für ein besonders gleichmäßiges diffuses Licht.

Das Innere des integrierenden Hohlraums ist insbesondere im vorbestimmten Wellenlängenbereich diffus reflektierend.

Der Sensor ist zumindest in einem Teilbereich des vorbestimmten Spektrums Lichtempfindlich. Weiterhin ist der der Sensor bevorzugt außerhalb des vorbestimmten Spektrums unempfindlich. Durch die Unempfindlichkeit außerhalb des vorbestimmten Spektrums wird die Messung durch Licht außerhalb des vorbestimmten Spektrums nicht verfälscht.

In einer vorteilhaften Ausgestaltung ist auf dem direkten Weg zwischen Lichtquelle und Öffnung eine erste Lichtsperre vorgesehen, wobei die erste Lichtsperre verhindert, dass Licht von der Lichtquelle direkt zur Öffnung gelangt. Durch die erste Lichtsperre wird sichergestellt, dass nur diffus innerhalb des Hohlraums gestreutes Licht zur Probe gelangt. Die Oberfläche der ersten Lichtsperre ist bevorzugt ebenso diffus reflektierend wie das Innere des Hohlraums. Die Probe wird durch die erzwungene diffuse Streuung besonders gleichmäßig beleuchtet.

In einer weiteren bevorzugten Ausgestaltung ist auf dem direkten Weg zwischen Sensor und Öffnung eine zweite Lichtsperre vorgesehen ist, wobei die zweite Lichtsperre verhindert, dass Licht von der Öffnung direkt zum Sensor gelangt. Durch die zweite Lichtsperre wird sichergestellt, dass nur von der Probe reflektiertes und diffus innerhalb des Hohlraums gestreutes Licht zum Sensor gelangt. Die Oberfläche der zweiten Lichtsperre ist bevorzugt ebenso diffus reflektierend wie das Innere des Hohlraums. Der Sensor erhält durch die erzwungene diffuse Streuung nur gemischtes Licht. Dies minimiert den Effekt den Änderungen der Oberflächenbeschaffenheit der Probe ansonsten auf das Messergebnis haben würden.

In einer vorteilhaften Ausgestaltung ist auf dem direkten Weg zwischen Sensor und Lichtquelle eine dritte Lichtsperre vorgesehen, wobei die dritte Lichtsperre verhindert, dass Licht von der Lichtquelle direkt zum Sensor gelangt. Durch die dritte Lichtsperre wird sichergestellt, dass nur gestreutes Licht den Sensor erreicht. Die Messung wird daher nicht durch direktes Licht von der Lichtquelle verfälscht.

Insbesondere wenn die erste Lichtsperre, die zweite Lichtsperre und die dritte Lichtsperre vorgesehen sind, wird eine besondere gute Vermessung der Probe erreicht.

In einer vorteilhaften Ausgestaltung gibt der Sensor Daten aus und die Messeinrichtung umfasst Mittel, um aus den Daten des Sensors einen Anteil von zumindest einem Inhaltsstoff, bevorzugt Feuchtigkeit, Protein, Lipid oder Kohlenhydrat, der Probe zu bestimmen. Durch die direkte Bestimmung des Anteils eines oder mehrerer Inhaltsstoffe wird der Anwender von der Analyse der Sensordaten entlastet.

In einer weiteren Ausgestaltung wird aus der Inhaltsstoffkonzentration zumindest ein Wert eines weiteren Merkmals der Probe bestimmt. Das Merkmal kann bspw. die Verdaulichkeit oder der Energiegehalt der Probe sein, diese Merkmale sind Funktionen der Inhaltsstoffkonzentrationen und lassen sich direkt aus der Inhaltsstoffkonzentration bestimmen. Durch die direkte Bestimmung des Wertes des Merkmals wird der Anwender weiter entlastet.

In einer vorteilhaften Ausgestaltung besteht die optische Öffnung aus Glas, bevorzugt aus Mineralglas, besonders bevorzugt aus Saphirglas. Glas ist hier weit zu verstehen und umfasst neben Mineralglas auch Acrylglas und Saphirglas. Insbesondere Saphirglas zeichnet sich durch eine hohe Kratzfestigkeit aus. Eine hohe Kratzfestigkeit ist vorteilhaft, wenn die Probe in direkten Kontakt mit dem Glas kommt und dieses zerkratzen könnte. Weiterhin besitzt Saphirglas gute Transmissionseigenschaften, insbesondere auch im infraroten Wellenlängenbereich.

Erfindungsgemäß umfasst die Messeinrichtung eine erste Abdeckung, wobei die erste Abdeckung dazu vorgesehen und eingerichtet ist, die optische Öffnung temporär so zu verschließen, dass die erste Abdeckung verhindert, dass Licht durch die optische Öffnung in den integrierenden Hohlraum eindringen kann. Wenn die erste Abdeckung die optische Öffnung verschließt, kann ein Weißsignal durch den Sensor aufgenommen werden und damit ein Weißabgleich durchgeführt werden. Im Weißsignal wird das von dem Hohlraum diffus gestreute Licht der Lichtquelle aufgezeichnet. Die Abdeckung befindet sich erfindungsgemäß innerhalb des integrierenden Hohlraums.

In einer vorteilhaften Ausgestaltung umfasst die Messeinrichtung eine zweite Abdeckung, wobei die zweite Abdeckung zwischen die Lichtquelle und den integrierenden Hohlraum geschoben werden kann, sodass die zweite Abdeckung verhindert, dass Licht der Lichtquelle den integrierenden Hohlraum erreicht. Die zweite Abdeckung ermöglicht eine lichtdichte Trennung zwischen der Lichtquelle und dem integrierenden Hohlraum. Wenn die zweite Abdeckung die Lichtquelle vom Hohlraum trennt, kann ein Dunkelsignal durch den Sensor aufgenommen werden und damit ein Dunkelabgleich durchgeführt werden. Im Dunkelsignal werden durch die optische Öffnung einfallendes Streulicht und der Dunkelstrom des Sensors aufgezeichnet.

In einer vorteilhaften Ausgestaltung sind die erste und/oder die zweite Abdeckung diffus reflektierend. Durch die diffuse Reflektion ist das Innere des Hohlraums komplett diffus reflektierend auch wenn die Abdeckung vor die Lichtquelle bzw. vor die optische Öffnung bewegt wird. Dadurch werden Lichtverluste sowie auch die Aufwärmung der mechanischen Komponenten minimiert.

In einer vorteilhaften Ausgestaltung umfasst die Messeinrichtung mehrere Sensoren, wobei die Sensoren unterschiedliche spektrale Sensitivitäten aufweisen. Durch die unterschiedlichen spektralen Sensitivitäten wird eine differenzierte Vermessung der Probe möglich. So können bspw. unterschiedliche Sensoren jeweils für Wellenlängenbereiche sensitiv sein, die für unterschiedliche Inhaltsstoffe charakteristisch sind. Beispielsweise könnte ein relativ preisgünstiger Spektrograph mit einer Diodenzeile aus sog. Standard-InGaAs Material den Spektralbereich 1.0 bis 1.7 µm detektieren, und gleichzeitig ein weiterer Spektrograph mit einer Diodenzeile gefertigt aus sog. Extended-InGaAs längere Wellenlängen im Bereich 1.7 - 2.4 µm detektieren. Da beide Spektrographen denselben Teil der Probe messen, können beide Spektren mathematisch zu einem längeren Spektrum vereint werden, wodurch eine genauere Bestimmung der Inhaltsstoffkonzentrationen und Proben-Merkmale möglich wird.

In einer vorteilhaften Ausgestaltung wird die spektrale Sensitivität der Sensoren im Wesentlichen durch optische Filter vor den Sensoren erzeugt wird. Optische Filter werden auch spektrale Filter genannt und sind typischerweise als Bandpassfilter ausgebildet. Bandpassfilter sind bevorzugt als Interferenzfilter mit vorgeschalteter Linse ausgestaltet. Alternativ sind auch Absorptionsfilter möglich. Durch die Nutzung von Filtern können für eine differenzierte Vermessung der Probe gleichartige breitbandige Sensoren genutzt werden. Dadurch wird der Aufbau der Messeinrichtung günstiger.

In einer vorteilhaften Ausgestaltung sendet die Lichtquelle ein breitbandiges Lichtspektrum aus. Ein breitbandiges Lichtspektrum ermöglicht die differenzierte Vermessung der Probe mit nur einer Lichtquelle. Ein bevorzugtes Beispiel für eine breitbandige Lichtquelle ist eine Halogenglühlampe.

In einer vorteilhaften Ausgestaltung umfasst die Messeinrichtung mehrere Lichtquellen, wobei die Lichtquellen jeweils Licht mit unterschiedlichen Wellenlängenbereichen abgeben. Die Nutzung mehrerer Lichtquellen, die Licht mit unterschiedlichen Wellenlängenbereichen aussenden ermöglicht die differenzierte Vermessung der Probe mit einem oder mehreren breitbandigen Sensoren. Ein bevorzugtes Beispiel für Lichtquellen mit unterschiedlichen Wellenlängenbereichen sind unterschiedliche LEDs. Um schmalbandigere Wellenlängenbereiche zu erhalten als sie von den LEDs ausgesendet werden können optische Filter vor der Lichtquelle verwendet werden.

In einer vorteilhaften Ausgestaltung weist das diffus reflektierende Innere des integrierenden Hohlraums in dem vorbestimmten Wellenlängenbereich eine Reflektanz von mindestens 95%, bevorzugt 98%, auf. Eine hohe Reflektanz verbessert die Dynamik der Sensorwerte und ermöglicht die Nutzung einer schwächeren Lichtquelle. Ein bevorzugtes Beispiel für eine Oberfläche mit hoher Reflektanz im nahinfratroten Wellenlängenbereich ist eine Beschichtung mit Polytetrafluorethylen.

Eine selbstfahrende Erntemaschine ist bspw. ein Mähdrescher oder ein Feldhäcksler. Bei einem Mähdrescher wird die optische Messeinrichtung zur Vermessung der ausgedroschenen Körner verwendet. Dazu wird die Messeinrichtung am sogenannten Kornelevator befestigt. Die Körner werden an der optischen Öffnung der Messeinrichtung vorbeibewegt und dabei vermessen. Bei einem Feldhäcksler wird die Messeinrichtung zur Vermessung des zerkleinerten Erntegutes eingesetzt. Dazu wird die Messeinrichtung am Auswurfkrümmer befestigt und das durch den Auswurfkrümmer bewegte Erntegut an der optischen Öffnung der Messeinrichtung vorbeibewegt und dabei vermessen.

Die Erfindung wird nachfolgend an mehreren in den Figuren dargestellten Beispielen erläutert. Es zeigen:
- Figur 1: eine schematische Darstellung einer optischen Messeinrichtung,
- Figur 2: eine schematische Darstellung einer weiteren optischen Messeinrichtung,
- Figur 3: eine Funktionsweise einer Abdeckung,
- Figur 4: eine alternative Funktionsweise einer Abdeckung,
- Figur 5: eine weitere Funktionsweise einer Abdeckung,
- Figur 6: eine schematische Darstellung eines Feldhäckslers mit einer optischen Messeinrichtung,
- Figur 7: einen Mähdrescher mit einer optischen Messeinrichtung an einem Kornelevator.

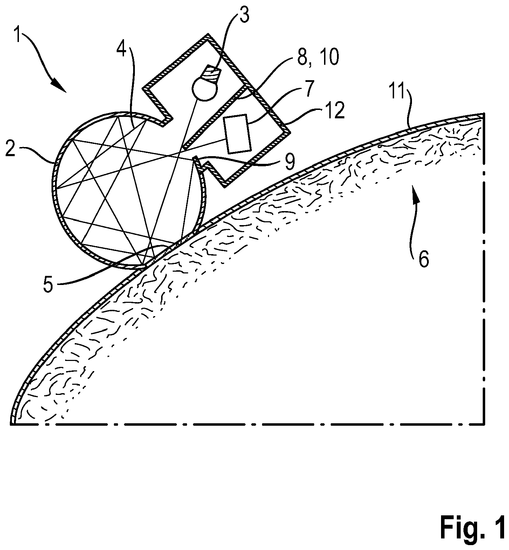

In Fig. 1 ist optische Messeinrichtung 1 schematisch dargestellt. Die Messeinrichtung 1 umfasst einen integrierenden Hohlraum 2. Das Innere des Hohlraums 2 ist diffus reflektierend und hier im Wesentlichen kugelförmig. Eine Lichtquelle 3 befindet sich außerhalb des Hohlraums 2 und gibt Licht 4 einer vorbestimmten Wellenlänge in den Hohlraum 2 ab. Das Licht 4 wird im Inneren des Hohlraums 2 diffus gestreut. Durch eine optische Öffnung 5 trifft ein Teil des Lichtes 4 auf die außerhalb des Hohlraums 2 befindliche Probe 6. Das von der Probe 6 reflektierte Licht 4 wird wieder im Hohlraum 2 diffus gestreut und gelangt zum Sensor 7. Die Lichtquelle 3 und der Sensor 7 befinden sich in einer quaderförmigen Ausbuchtung 12 des Hohlraums. Eine erste Lichtsperre 8, 10 ist als Wand zwischen der Lichtquelle 3 und dem Sensor 7 vorhanden. Die Lichtsperre 8, 10 hat in diesem Beispiel zwei Aufgaben. Erstens verhindert die Lichtsperre 8, dass Licht 4 von der Lichtquelle 3 direkt zur optischen Öffnung 5 gelangt. Zweitens verhindert die Lichtsperre 10, dass Licht 4 von der Lichtquelle 3 direkt zum Sensor 7 gelangt. Die erste Lichtsperre 8, 10 erfüllt also die Aufgaben der oben beschriebenen ersten Lichtsperre und der dritten Lichtsperre. Eine zweite Lichtsperre 9 verhindert, dass Licht 4 von der optischen Öffnung 5 direkt zum Sensor 7 gelangt. Die Messeinrichtung 1 dieses Beispiels ist an einem Auswurfkrümmer 11 eines Feldhäckslers angebracht. Die optische Öffnung 5 besteht aus Saphirglas. Das Saphirglas bildet gleichzeitig einen Teil der Wandung des Auswurfkrümmers 11.

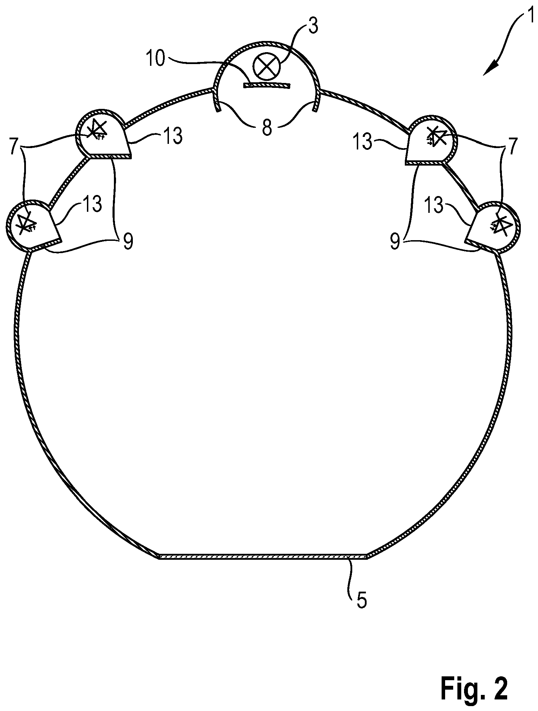

In Figur 2 ist eine weitere optische Messeinrichtung 1 schematisch dargestellt. Im Folgenden werden nur die Unterschiede zu Figur 1 beschrieben. Die Lichtquelle 3, hier eine breitbandige Halogenglühlampe, ist in einer halbkugelförmigen Ausnehmung des integrierenden Hohlraums 2 befestigt. Vier identische Sensoren 7 sind jeweils in anderen halbkugelförmigen Ausnehmungen befestigt. Zwei erste Lichtsperren 8 verhindern, dass Licht von der Lichtquelle 3 direkt zu den Sensoren 7 gelangt. Vor jedem Sensor ist jeweils eine zweite Lichtsperre 9 angebracht, die verhindert, dass Licht von der Öffnung 5 direkt zu den Sensoren gelangt. Eine dritte Lichtsperre 10 ist vor der Lichtquelle angebracht und verhindert, dass Licht von der Lichtquelle direkt zur Öffnung 5 gelangt. Vor den Sensoren 7 sind jeweils schmalbandige optische Bandpassfilter 13 angebracht. Durch die Filter 13 gelangt jeweils nur ein schmaler Wellenlängenbereich zu den Sensoren 7. Vor jedem Sensor 7 ist ein anderer Filter 13 angebracht, sodass jeder Sensor einen anderen Wellenlängenbereich detektiert. In diesem Beispiel misst ein erster Sensor einen schmalbandigen Wellenlängen Bereich um 1820nm, ein zweiter Sensor einen schmalbandigen Wellenlängen Bereich um 2000nm, ein dritter Sensor einen schmalbandigen Wellenlängen Bereich um 1940nm und ein vierter Sensor einen schmalbandigen Wellenlängen Bereich um 2110nm. Die breitbandige Lichtquelle sendet Licht in allen vier Wellenlängenbereichen aus. Die Messeinrichtung 1 dieses Beispiels dient der Messung von Feuchtigkeit im Erntegut eines Feldhäckslers. Die Daten des ersten Sensors und des zweiten Sensors dienen als Basislinien für die Berechnung der Feuchtigkeit. Die Daten des dritten Sensors dienen der Messung des Wasseranteils des Ernteguts und die Daten des vierten Sensors dienen der Messung des Celluloseanteils des Ernteguts.

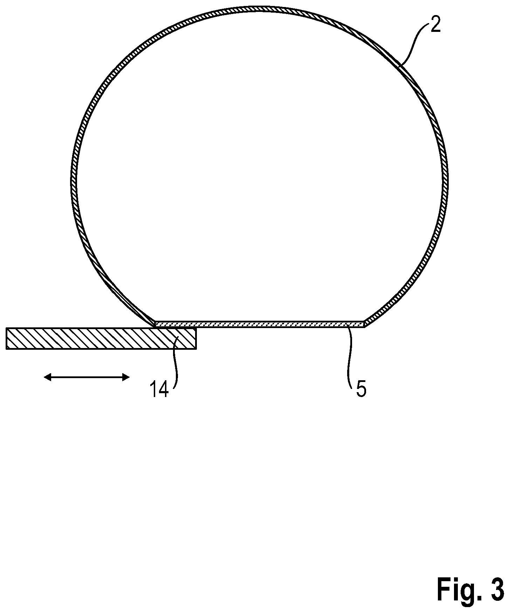

Die Figuren 3,4 und 5 dienen nur der Illustration der Funktionsweise von Abdeckungen der optischen Öffnung oder einer Ausnehmung für eine Lichtquelle. Figur 3 zeigt einen integrierenden Hohlraum 2 mit einer optischen Öffnung 5 aus Saphirglas. In einer nicht erfindungsgemäßen Ausführungsform befindet sich eine Abdeckung 14 außerhalb des Hohlraums 2 und kann so vor die Öffnung bewegt werden dass kein Licht die Öffnung durchqueren kann. Wenn die Abdeckung 14 die optische Öffnung 5 lichtdicht verschließt kann ein Weißsignal aufgenommen werden.

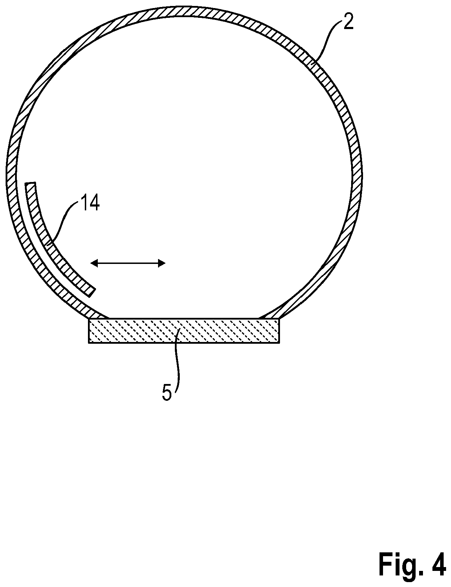

Figur 4 zeigt eine in einer erfindungsgemäßen Erntemaschine verwendete Abdeckung 14. Diese Abdeckung 14 befindet sich innerhalb des Hohlraums 2 und kann innerhalb des Hohlraums 2 so bewegt werden, dass kein Licht die Öffnung 5 durchqueren kann.

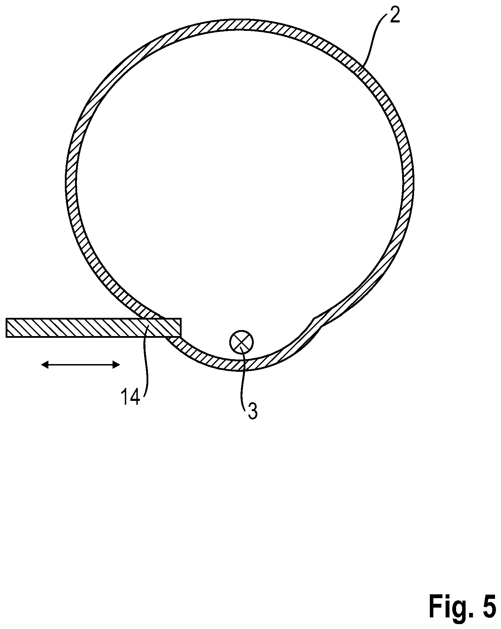

Figur 5 zeigt einen Hohlraum 2 und eine Lichtquelle 3, die sich in einer Ausnehmung des Hohlraums 2 befindet. Eine Abdeckung 14 kann so in den Hohlraum 2 bewegt werden, dass die Abdeckung 14 verhindert, dass Licht der Lichtquelle den Hohlraum erreicht. Es versteht sich, dass die Abdeckung 14 auch wie die Abdeckung aus Figur 4 innerhalb des Hohlraums 2 bewegt werden kann.

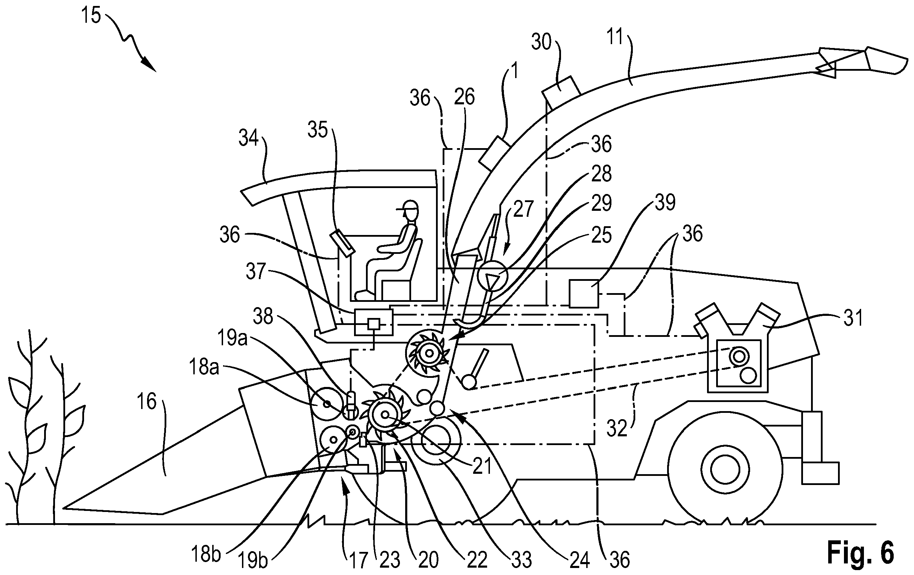

Figur 6 zeigt eine schematische Darstellung eines Feldhäckslers mit einer optischen Messeinrichtung. Der Feldhäcksler 15 weist ein Vorsatzgerät 16 zum Ernten von Erntegut auf. Das Vorsatzgerät 16 kann unter anderem als sogenanntes Maisgebiss oder als Maispflücker ausgebildet sein. Für das Ernten von Gras kann das Vorsatzgerät 16 als ein Mähwerk ausgeführt sein.

Das von dem Vorsatzgerät 16 aufgenommene Erntegut wird einer Einzugsvorrichtung 17 zugeführt. Die Einzugsvorrichtung 17 umfasst zumindest ein erstes Paar Walzen 18a, 18b und ein zweites Paar Walzen 19a, 19b, die an einem Rahmen oder einem Gehäuse angeordnet sind. Die zumindest zwei Walzenpaare 18a, 18b und 19a, 19b dienen dem Einzug und Vorpressen des Erntegutes.

Der Einzugsvorrichtung 17 ist eine Häckselvorrichtung 20 nachgeordnet Die Häckselvorrichtung 20 umfasst eine mit Häckselmessern 22 bestückte, rotierend angetriebene Häckseltrommel 21. Zum Zerkleinern des in Form einer verdichteten Erntegutmatte zugeführten Erntegutes wirken die mit der Häckseltrommel 21 rotierenden Häckselmesser 22 mit einer ortsfest angeordneten Gegenschneide 23 der Häckselvorrichtung 20 zusammen.

Das aus der Häckselvorrichtung 20 austretende zerkleinerte Erntegut kann einer optional vorgesehenen Nachbearbeitungsvorrichtung 24 zugeführt werden. Die Nachbearbeitungsvorrichtung 24, auch als Konditioniereinrichtung oder Corncracker bezeichnet, dient dem Aufschließen von Maiskörnern, um die Verwertbarkeit bzw. Energieausbeute bei einem Einsatz als Futtermittel bzw. in einer Biogasanlage zu erhöhen.

Von der Häckselvorrichtung 20 bzw. der optionalen Nachbearbeitungsvorrichtung 24 gelangt das zerkleinerte Erntegut zu einer Nachbeschleunigungsvorrichtung 25, welche das Erntegut durch einen Förderschacht 26 und eine sich daran anschließende als Auswurfkrümmer ausgebildete Auswurfvorrichtung 11 an ein benachbart zu dem Feldhäcksler 15 fahrendes - nicht dargestelltes- Transportfahrzeug überlädt. Im Bereich der Nachbeschleunigungsvorrichtung 25 ist eine Siliermitteldosiervorrichtung 27 angeordnet, die mittels einer Förderpumpe 28 mit veränderlichem Fördervolumen eine Flüssigkeit in den Förderschacht 26 einbringt. Hierzu ist ein in dem Förderschacht 26 endender, sich in Stromrichtung des Ernteguts öffnender Injektor 29 vorgesehen, wodurch die Flüssigkeit in fein verspritzter Form auf das vorbeiströmende Erntegut appliziert wird. An der Auswurfvorrichtung 11 ist zumindest eine Messeinrichtung 1 angeordnet welche zur Vermessung des Ernteguts eingerichtet ist. Das Erntegut wird im Auswurfkrümmer 11 an der optischen Öffnung der Messeinrichtung 1 vorbeigeführt. Die Messeinrichtung 1 vermisst das Erntegut bei mehreren NIR-Frequenzen und bestimmt Inhaltsstoffe des Erntegutes wie Wasser, Lipide, Kohlenhydrate oder Proteine. Die Zuordnung eines oder mehrerer weiterer Sensoren 30 zur Bestimmung der Häcksellänge, der Strömungsgeschwindigkeit des Erntegutes und/oder des Massenstroms des vorbeiströmenden Erntegutes zu der Auswurfvorrichtung 11 ist vorsehbar.

Zum Antreiben des Feldhäckslers 15 ist eine als Verbrennungsmotor ausgebildete Antriebsvorrichtung 31 vorgesehen, die mittels eines Riementriebs 32 die Häckselvorrichtung 20, die Nachbearbeitungsvorrichtung 24 und die Nachbeschleunigungsvorrichtung 25 antreibt. Das Vorsatzgerät 16 sowie die Einzugsvorrichtung 17 sind durch einen weiteren Antriebsstrang antreibbar, welcher mechanisch mit der Häckselvorrichtung 20 gekoppelt sein kann oder unabhängig von der Häckselvorrichtung 20 hydrostatisch betreibbar ist. Weiterhin ist ein, insbesondere hydrostatischer, Fahrantrieb 33 vorgesehen, mit welchem die Fahrgeschwindigkeit des Feldhäckslers 15 regelbar ist.

Der Feldhäcksler 15 weist eine Kabine 34 auf, in der eine Ein-/ Ausgabevorrichtung 35 vorgesehen ist, welche einer Bedienperson des Feldhäckslers 15 zur Verfügung steht, um beispielsweise Betriebsparameter ein- und verstellen zu können und um die Bedienperson über aktuelle Betriebs- bzw. Erntebedingungen zu informieren. Die Ein-/Ausgabevorrichtung 35 steht durch ein Bussystem 36 mit einem Fahrerassistenzsystem 37 des Feldhäckslers 15 in Verbindung. Das Bussystem 36 verbindet darüber hinaus die Sensoren 1, 30 an der Auswurfvorrichtung 11 sowie einen Sensor 38 der Einzugsvorrichtung 17 und weitere - in Fig. 1 nicht dargestellte - Sensoren bzw. Sensorsysteme und Aktuatoren zur Überwachung sowie zur Einstellung und/oder Betätigung von Vorsatzgerät 16, Einzugsvorrichtung 17, Häckselvorrichtung 20, Schleifvorrichtung, Nachbearbeitungsvorrichtung 24, Nachbeschleunigungsvorrichtung 25, Siliermitteldosiervorrichtung 27, Auswurfvorrichtung 11 sowie den Fahrantrieb 33. Die von dem Messeinrichtung 1 ermittelten Messwerte können über das Bussystem 36 an die Die Ein-/Ausgabevorrichtung 35 übertragen und dort dem Fahrer angezeigt werden. Weiterhin kann der Fahrer die Messeinrichtung 1 über die Ein-/Ausgabevorrichtung 35 konfigurieren.

Weiterhin zeigt die Darstellung in Fig. 6 eine Kommunikationseinheit 39, welche an das Bussystem 36 angeschlossen ist. Die Kommunikationseinheit 39 ist zum übertragen von Busdaten an externe Kommunikationspartner und zum Übertragen von empfangen Daten über das Bussystem 36 eingerichtet. Die von der Messeinrichtung 1 ermittelten Messwerte können über das Bussystem 36 und die Kommunikationseinheit an eine externe Stelle, bspw. ein Farm-Managementsystem, übertragen werden. Weiterhin können von einer externen Stelle gesendete Konfigurationsdaten von der Kommunikationseinheit 39 empfangen und über das Bussystem 36 an die Messeinheit 1 übertragen werden.

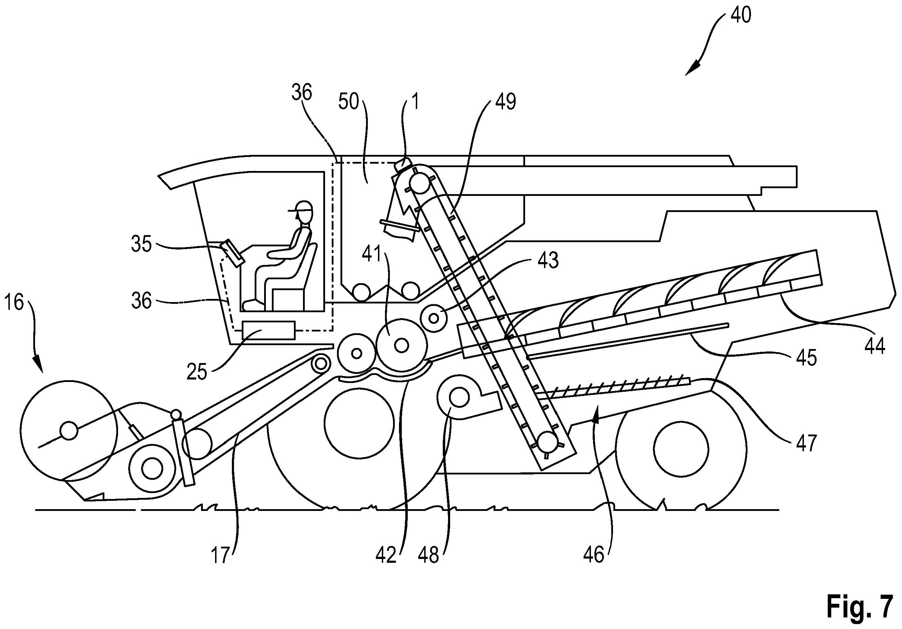

Figur 7 zeigt eine schematische Darstellung eines Mähdreschers 40. Der Mähdrescher 40 umfasst eine optische Messeinrichtung 1 zur Vermessung von Erntegut sowie ein Fahrerassistenzsystem 37 und eine Ein-/Ausgabevorrichtung 35 zur Anzeige der Inhaltsstoffe des Erntegutstroms. Wie auf dem Feldhäcksler kann der Fahrer die Messeinrichtung 1 über die Ein-/Ausgabevorrichtung 35 konfigurieren. Hierbei können insbesondere das Fahrerassistenzsystem 37 und die Ein-/Ausgabevorrichtung 35 sowohl separat als auch als einzelnes Gerät ausgeführt werden.

Der Mähdrescher 40 weist ein Vorsatzgerät 16 zum Ernten von Erntegut auf. Das von dem Vorsatzgerät 16 aufgenommene Erntegut wird einer Einzugsvorrichtung 17 zugeführt. Die Einzugsvorrichtung 17 befördert das Erntegut zu einem Dreschwerk bestehend aus Dreschtrommel 41 und Dreschkorb. Über eine Umlenktrommel 43 gelangt das Erntegut in eine hier als Trennrotor ausgebildete Trenneinrichtung 44, in welchem freibewegliche Körner des Erntegutstroms in einen unteren Bereich abgeschieden werden. Von hier aus gelangt der Erntegutstrom über den Rücklaufboden 45 zu einer Reinigungsvorrichtung 46, die wie hier dargestellt aus mehreren Siebebenen 47 und einem Gebläse 48 besteht. Von hier aus führt der Kornelevator 19 den Erntegutstrom schließlich zum Korntank 50. Am oberen Ende des Kornelevators 49befindet sich die Messeinrichtung 1. Der Kornelevator 49 befördert das Erntegut an der optischen Öffnung des Messeinrichtung 1 vorbei und die Messeinrichtung 1 vermisst das Erntegut. Die Messeinrichtung 1 vermisst das Erntegut bei mehreren NIR-Frequenzen und bestimmt Inhaltsstoffe des Erntegutes wie Wasser, Lipide, Kohlenhydrate oder Proteine. Die Messeinrichtung 1 ist über ein Bussystem 36 mit dem Fahrerassistenzsystem 25 und der Ein-/Ausgabevorrichtung 35 verbunden.

### Bezugszeichenliste:

| | | | |
|---|---|---|---|
| 1 | Optische Messeinrichtung | 34 | Kabine |
| 2 | Integrierender Hohlraum | 35 | Ein-/ Ausgabevorrichtung |
| 3 | Lichtquelle | 36 | Bussystem |
| 4 | Licht | 37 | Fahrerassistenzsystem |
| 5 | Optische Öffnung | 38 | Sensor |
| 6 | Probe | 39 | Kommunikationseinheit |
| 7 | Sensor | 40 | Mähdrescher |
| 8 | Erste Lichtsperre | 41 | Dreschtrommel |
| 9 | Zweite Lichtsperre | 42 | Dreschkorb |
| 10 | Dritte Lichtsperre | 43 | Umlenktrommel |
| 11 | Auswurfkrümmer | 44 | Trenneinrichtung |
| 12 | Ausbuchtung | 45 | Rücklaufboden |
| 13 | Filter | 46 | Reinigungsvorrichtung |
| 14 | Abdeckung | 47 | Sieb |
| 15 | Feldhäcksler | 48 | Gebläse |
| 16 | Vorsatzgerät | 49 | Kornelevator |
| 17 | Einzugsvorrichtung | 50 | Korntank |
| 18a | Walze | | |
| 18b | Walze | | |
| 19a | Walze | | |
| 19b | Walze | | |
| 20 | Häckselvorrichtung | | |
| 21 | Häckseltrommel | | |
| 22 | Häckselmesser | | |
| 23 | Gegenschneide | | |
| 24 | Nachbearbeitungsvorrichtung | | |
| 25 | Nachbeschleunigungsvorrichtung | | |
| 26 | Förderschacht | | |
| 27 | Siliermitteldosiervorrichtung | | |
| 28 | Förderpumpe | | |
| 29 | Injektor | | |
| 30 | Sensor | | |
| 31 | Antriebsvorrichtung | | |
| 32 | Riementriebs | | |
| 33 | Fahrantrieb | | |

## Patentansprüche

1. Erntemaschine, insbesondere selbstfahrende Erntemaschine, mit einer optischen Messeinrichtung (1) zum spektralen Vermessen einer Probe, die dazu vorgesehen und eingerichtet ist, Erntegut der Erntemaschine zu vermessen,
**dadurch gekennzeichnet,**
**dass** die optische Messeinrichtung (1) zum spektralen Vermessen einer Probe folgendes umfasst:
- einen integrierenden Hohlraum (2), der ein diffus reflektierendes Inneres aufweist, um Licht (4) in dem integrierenden Hohlraum diffus zu machen;
- eine Lichtquelle (3), die konfiguriert ist, Licht (4) eines vorbestimmten Wellenlängenbereichs in den integrierenden Hohlraum (2) abzugeben;
- einen Sensor (7) der konfiguriert ist, Licht (4) aus dem integrierenden Hohlraum (2) zu empfangen,
wobei der integrierende Hohlraum (2) eine optische Öffnung (5) umfasst, wobei die Messeinrichtung (1) dazu vorgesehen und eingerichtet ist, eine außerhalb des integrierenden Hohlraums (2) unmittelbar vor der optischen Öffnung (5) befindliche Probe (6) zu vermessen,
wobei sich eine erste Abdeckung (14) innerhalb des Hohlraums (2) befindet und innerhalb des Hohlraums (2) so bewegt werden kann, dass kein Licht die Öffnung (5) durchqueren kann.

2. Erntemaschine nach Anspruch 1, **dadurch gekennzeichnet, dass** auf dem direkten Weg zwischen Lichtquelle (3) und Öffnung (5) eine erste Lichtsperre (10) vorgesehen ist, wobei die erste Lichtsperre (8) verhindert, dass Licht (4) von der Lichtquelle (3) direkt zur Öffnung (5) gelangt.

3. Erntemaschine nach einem der Ansprüche 1 oder 2, **dadurch gekennzeichnet, dass** auf dem direkten Weg zwischen Sensor (7) und Öffnung (5) eine zweite Lichtsperre (9) vorgesehen ist, wobei die zweite Lichtsperre (9) verhindert, dass Licht (4) von der Öffnung (5) direkt zum Sensor (7) gelangt.

4. Erntemaschine nach einem der vorhergehenden Ansprüche, **dadurch gekennzeichnet, dass** auf dem direkten Weg zwischen Sensor (7) und Lichtquelle (3) eine dritte Lichtsperre (8) vorgesehen ist, wobei die dritte Lichtsperre (8) verhindert, dass Licht (4) von der Lichtquelle (3) direkt zum Sensor (7) gelangt.

5. Erntemaschine nach einem der vorhergehenden Ansprüche, **dadurch gekennzeichnet dass** der Sensor (7) Daten ausgibt und die Messeinrichtung Mittel umfasst, um aus den Daten des Sensors (7) einen Anteil von zumindest einem Inhaltsstoff, bevorzugt Feuchtigkeit, Protein, Lipid oder Kohlenhydrat, der Probe (6) zu bestimmen.

6. Erntemaschine nach einem der vorhergehenden Ansprüche, **dadurch gekennzeichnet, dass** die optische Öffnung (5) aus Glas, bevorzugt aus Mineralglas, besonders bevorzugt aus Saphirglas besteht.

7. Erntemaschine nach einem der vorhergehenden Ansprüche, **dadurch gekennzeichnet, dass** die Messeinrichtung (1) eine zweite Abdeckung (14) umfasst, wobei die zweite Abdeckung (14) zwischen die Lichtquelle (3) und den integrierenden Hohlraum (2) geschoben werden kann, sodass die zweite Abdeckung (14) verhindert, dass Licht (4) der Lichtquelle (3) den integrierenden Hohlraum erreicht.

8. Erntemaschine nach einem der vorhergehenden Ansprüche, **dadurch gekennzeichnet, dass** die erste und/oder die zweite Abdeckung (14) diffus reflektierend sind.

9. Erntemaschine nach einem der vorhergehenden Ansprüche, **dadurch gekennzeichnet, dass** die Messeinrichtung (1) mehrere Sensoren (7) umfasst, wobei die Sensoren (7) unterschiedliche spektrale Sensitivitäten aufweisen.

10. Erntemaschine nach Anspruch 9, **dadurch gekennzeichnet, dass** die spektrale Sensitivität im Wesentlichen durch optische Filter (13) vor den Sensoren (7) erzeugt wird.

11. Erntemaschine nach einem der vorhergehenden Ansprüche, **dadurch gekennzeichnet, dass** die Lichtquelle (3) ein breitbandiges Lichtspektrum aussendet.

12. Erntemaschine nach einem der vorhergehenden Ansprüche, **dadurch gekennzeichnet, dass** die Messeinrichtung (1) mehrere Lichtquellen (3) umfasst, wobei die Lichtquellen jeweils Licht (4) mit unterschiedlichen Wellenlängenbereichen abgeben.

13. Erntemaschine nach einem der vorhergehenden Ansprüche, **dadurch gekennzeichnet, dass** das diffus reflektierende Innere des integrierenden Hohlraums (2) in dem vorbestimmten Wellenlängenbereich eine Reflektanz von mindestens 95%, bevorzugt 98%, aufweist.

## Claims

1. A harvesting machine, in particular a self-propelled harvesting machine, with an optical measuring device (1) for the spectral measurement of a sample, which is provided and configured so as to measure harvested material of the harvesting machine,
**characterized in that**
the optical measuring device (1) for the spectral measurement of a sample comprises the following:
- an integrating cavity (2) which has a diffusely reflective interior in order to render light (4) in the integrating cavity (2) diffuse;
- a light source (3) which is configured to emit light (4) with a predetermined range of wavelengths into the integrating cavity (2);
- a sensor (7) which is configured to receive light (4) from the integrating cavity (2);
wherein the integrating cavity (2) comprises an optical opening (5), wherein the measuring device (1) is provided and configured so as to measure a sample (6) located outside the integrating cavity (2) directly in front of the optical opening (5),
wherein a first cover (14) is located inside the cavity (2) and can be moved inside the cavity (2) in a manner such that no light can pass through the opening (5).

2. The harvesting machine according to claim 1, **characterized in that** a first light barrier (10) is provided on the direct path between the light source (3) and the opening (5), wherein the first light barrier (8) prevents light (4) from the light source (3) from directly reaching the opening (5).

3. The harvesting machine according to claim 1 or claim 2, **characterized in that** a second light barrier (9) is provided on the direct path between the sensor (7) and the opening (5), wherein the second light barrier (9) prevents light (4) from the opening (5) from directly reaching the sensor (7).

4. The harvesting machine according to one of the preceding claims, **characterized in that** a third light barrier (8) is provided on the direct path between the sensor (7) and light source (3), wherein the third light barrier (8) prevents light (4) from the light source (3) from directly reaching the sensor (7).

5. The harvesting machine according to one of the preceding claims, **characterized in that** the sensor (7) generates data and the measuring device comprises means for determining a proportion of at least one constituent in the sample (6), preferably moisture, protein, lipid or carbohydrate, from the data from the sensor (7).

6. The harvesting machine according to one of the preceding claims, **characterized in that** the optical opening (5) consists of glass, preferably of mineral glass, particularly preferably of sapphire glass.

7. The harvesting machine according to one of the preceding claims, **characterized in that** the measuring device (1) comprises a second cover (14), wherein the second cover (14) can be pushed between the light source (3) and the integrating cavity (2) so that the second cover (14) prevents light (4) from the light source (3) from reaching the integrating cavity.

8. The harvesting machine according to one of the preceding claims, **characterized in that** the first and/or the second cover (14) are diffusely reflective.

9. The harvesting machine according to one of the preceding claims, **characterized in that** the measuring device (1) comprises a plurality of sensors (7), wherein the sensors (7) have different spectral sensitivities.

10. The harvesting machine according to claim 9, **characterized in that** the spectral sensitivity is substantially generated by optical filters (13) in front of the sensors (7).

11. The harvesting machine according to one of the preceding claims, **characterized in** the light source (3) emits a broadband light spectrum.

12. The harvesting machine according to one of the preceding claims, **characterized in that** the measuring device (1) comprises a plurality of light sources (3), wherein the light sources each emit light (4) with different ranges of wavelengths.

13. The harvesting machine according to one of the preceding claims, **characterized in that** the diffusely reflecting interior of the integrating cavity (2) has a reflectance of at least 95%, preferably 98%, in the predetermined range of wavelengths.

## Revendications

1. Machine de récolte, en particulier machine de récolte automotrice, comprenant un dispositif de mesure optique (1) destiné à la mesure spectrale d'un échantillon, qui est prévu et conçu pour mesurer des produits récoltés de la machine de récolte,
**caractérisée en ce que**
le dispositif de mesure optique (1) pour la mesure spectrale d'un échantillon comprend les éléments suivants :
- une cavité (2) intégrante qui présente un espace interne à réflexion diffuse, aux fins de rendre la lumière (4) diffuse dans la cavité intégrante ;
- une source lumineuse (3) qui est configurée pour émettre de la lumière (4) d'une gamme de longueurs d'onde définie dans la cavité intégrante (2) ;
- un capteur (7) qui est configuré pour recevoir de la lumière (4) provenant de la cavité intégrante (2),
la cavité intégrante (2) comprenant une ouverture optique (5), le dispositif de mesure (1) étant prévu et conçu pour mesurer un échantillon (6) se trouvant à l'extérieur de la cavité intégrante (2), directement devant l'ouverture optique (5), un premier élément de recouvrement (14) se trouvant à l'intérieur de la cavité (2) et pouvant être déplacé dans la cavité (2) de manière à ce que la lumière ne puisse pas traverser l'ouverture (5).

2. Machine de récolte selon la revendication 1, **caractérisée en ce qu'**un premier moyen de blocage de la lumière (10) est prévu sur le trajet direct entre la source lumineuse (3) et l'ouverture (5), le premier moyen de blocage de la lumière (10) empêchant la lumière (4) de passer directement de la source lumineuse (3) à l'ouverture (5).

3. Machine de récolte selon l'une des revendications 1 ou 2, **caractérisée en ce qu'**un deuxième moyen de blocage de la lumière (9) est prévu sur le trajet direct entre le capteur (7) et l'ouverture (5), le deuxième moyen de blocage de la lumière (9) empêchant la lumière (4) de passer directement de l'ouverture (5) au capteur (7).

4. Machine de récolte selon l'une des revendications précédentes, **caractérisée en ce qu'**un troisième moyen de blocage de la lumière (8) est prévu sur le trajet direct entre le capteur (7) et la source lumineuse (3), le troisième moyen de blocage de la lumière (8) empêchant la lumière (4) de passer directement de la source lumineuse (3) au capteur (7).

5. Machine de récolte selon l'une des revendications précédentes, **caractérisée en ce que** le capteur (7) délivre des données et le dispositif de mesure comprend des moyens pour déterminer, à partir des données du capteur (7), une proportion d'au moins un composant, de préférence d'humidité, de protéine, de lipide ou de glucide, de l'échantillon (6).

6. Machine de récolte selon l'une des revendications précédentes, **caractérisée en ce que** l'ouverture optique (5) est constituée de verre, de préférence de verre minéral, et de manière particulièrement avantageuse de verre saphir.

7. Machine de récolte selon l'une des revendications précédentes, **caractérisée en ce que** le dispositif de mesure (1) comprend un deuxième élément de recouvrement (14), le deuxième élément de recouvrement (14) pouvant être glissé entre la source lumineuse (3) et la cavité intégrante (2), de sorte que le deuxième élément de recouvrement (14) empêche la lumière (4) de la source lumineuse (3) d'atteindre la cavité intégrante (2).

8. Machine de récolte selon l'une des revendications précédentes, **caractérisée en ce que** le premier et/ou le deuxième élément de recouvrement (14) est/sont à réflexion diffuse.

9. Machine de récolte selon l'une des revendications précédentes, **caractérisée en ce que** le dispositif de mesure (1) comprend plusieurs capteurs (7), les capteurs (7) présentant des sensibilités spectrales différentes.

10. Machine de récolte selon la revendication 9, **caractérisée en ce que** la sensibilité spectrale est créée essentiellement par des filtres optiques (13) devant les capteurs (7).

11. Machine de récolte selon l'une des revendications précédentes, **caractérisée en ce que** la source lumineuse (3) émet un spectre de lumière à bande large.

12. Machine de récolte selon l'une des revendications précédentes, **caractérisée en ce que** le dispositif de mesure (1) comprend plusieurs sources lumineuses (3), les sources lumineuses émettant respectivement de la lumière (4) avec des gammes de longueurs d'onde différentes.

13. Machine de récolte selon l'une des revendications précédentes, **caractérisée en ce que** l'intérieur à réflexion diffuse de la cavité intégrante (2) présente une réflectance d'au moins 95 %, de préférence de 98 %, dans la gamme de longueurs d'onde prédéfinie.
